# EUROPÄISCHE PATENTSCHRIFT

(11) **EP 2 531 781 B1**
(45) Veröffentlichungstag und Bekanntmachung des Hinweises auf die Patenterteilung: **29.08.2018**
(21) Anmeldenummer: 11701265.8
(22) Anmeldetag: 27.01.2011
(51) Int. Cl.: F24S 25/00

(54) **SEGMENT EINES SOLARKOLLEKTORS SOWIE SOLARKOLLEKTOR**
SEGMENT OF A SOLAR COLLECTOR AND SOLAR COLLECTOR
SEGMENT D'UN CAPTEUR SOLAIRE ET CAPTEUR SOLAIRE

(30) Priorität: 01.02.2010 DE 102010006532
(43) Veröffentlichungstag der Anmeldung: 12.12.2012
(73) Patentinhaber: Fürst zu Waldburg-Waldegg und Waldsee, Johannes, 88364 Waldegg (DE)
(72) Erfinder: KRÜGER, Joachim, 17179 Duckwitz (DE)
(74) Vertreter: Cohausz & Florack
(86) Internationale Anmeldenummer: PCT/EP2011/051147
(87) Internationale Veröffentlichungsnummer: WO 2011/092246

(56) Entgegenhaltungen:
- EP-A1- 1 947 403
- WO-A1-2008/010031
- DE-A1- 19 744 767
- DE-T2- 60 208 680
- US-A- 4 423 719
- US-A- 4 432 343

## Beschreibung

Die vorliegende Erfindung betrifft den Aufbau von Solarkollektoren sowie den Aufbau von Segmenten eines Solarkollektors.

Solarkollektoren werden häufig in Form von Parabolrinnenkonzentratoren in Kraftwerken oder zur Gewinnung von Prozesswärme eingesetzt.

Derartige Großanlagen können aus mehreren hintereinander angeordneten Solarkollektoren mit rinnenförmigen Reflektoren bestehen, die das Sonnenlicht auf einen rohrförmigen Absorber lenken. Um die Solarkollektoren entsprechend des Sonnenlichtes auszurichten, ist es bekannt, die rinnenförmigen Reflektoren um ihre Längsachse zu drehen. Um den vorrichtungstechnischen Aufwand zu verringern, werden dabei zumeist mehrere hintereinander angeordnete Reflektoren gleichzeitig über einen Antrieb gedreht.

Auf diese Weise werden teilweise Konstruktionen von bis zu 120 m Länge gedreht. Dafür müssen die rinnenförmigen Reflektoren eine hohe Torsionssteifigkeit aufweisen, damit es nur zu einer geringen Drehwinkelabweichung bei der Drehung der Reflektoren kommen kann.

Dabei wurden in der Vergangenheit die Solarkollektoren häufig aus Stahlkonstruktionen mit darauf aufgesetzten Spiegeln hergestellt, was jedoch zu einem hohen Gewicht der Solarkollektoren führte. Ferner wurden aufwändige Stützkonstruktionen notwendig und aufgrund des Gewichtes fielen hohe Transportkosten an. Häufig mussten die Reflektoren aus einzelnen Bauteilen vor Ort montiert werden, wodurch am Aufstellungsort ein hoher Montageaufwand entstand.

Solarkollektoren in Leichtbauweise hingegen haben jedoch häufig den Nachteil einer mangelnden selbstragenden Struktur, so dass eine Vielzahl von Stützen notwendig ist oder die Solarkollektoren nur recht klein ausgestaltet sein können.

DE 197 44 767 beschreibt ein Segment eines Solarkollektors gemäß dem Oberbegriff des Anspruchs 1. Es ist daher die Aufgabe der vorliegenden Erfindung, ein Segment eines Solarkollektors bereit zu stellen, der einen Solarkollektor mit einem leichten Aufbau, einer hohen Torsionssteifigkeit und einer selbsttragenden Struktur ermöglicht, wobei gleichzeitig der Montageaufwand am Aufstellungsort gering gehalten werden soll.

Es ist ferner die Aufgabe der vorliegenden Erfindung, einen Solarkollektor mit einem leichten Aufbau mit selbsttragender Struktur bereitzustellen.

Zur Lösung der Aufgabe dienen die Merkmale des Anspruchs 1 und des Anspruchs 13.

Erfindungsgemäß ist vorgesehen, dass ein Segment eines sich in eine Längsrichtung erstreckenden Solarkollektors eine Plattenanordnung mit einer flächigen Oberseite aufweist, wobei eine Reflektionsschicht auf der Oberseite angeordnet ist.

An der Unterseite der Plattenanordnung sind mehrere Rippenelemente angeordnet, wobei jedes Rippenelement sich quer zu der Längsrichtung des Solarkollektors erstreckt. Das Segment weist ferner mindestens ein Versteifungselement auf, das sich in Längsrichtung des Solarkollektors erstreckt und die Rippenelemente verbindet. Vorzugsweise handelt es sich bei dem Versteifungselement um mindestens ein Strebenelement.

Durch das Vorsehen von Rippenelementen, die an der Unterseite der Plattenanordnung angeordnet sind und sich quer zu der Längsrichtung des Solarkollektors erstrecken, wird in vorteilhafter Weise eine selbsttragende Struktur des Segmentes bzw. eines aus den erfindungsgemäßen Segmenten hergestellten Solarkollektors ermöglicht, wobei gleichzeitig ein leichter Aufbau realisiert wird.

Es hat sich herausgestellt, dass ein aus den erfindungsgemäßen Segmenten hergestellter Solarkollektor sich als sehr stabil, beispielsweise in Bezug auf von außen einwirkende Last, wie beispielsweise starke Winde, erweist.

Die sich in Längsrichtung des Solarkollektors erstreckenden Versteifungselemente sorgen für weitere Stabilität des Segmentes und somit des Solarkollektors und erhöhen die Torsionssteifigkeit des Segmentes.

Durch den erfindungsgemäßen Aufbau der Segmente können Panele, die aus einem oder mehreren erfindungsgemäßen Segmenten bestehen und aus denen erfindungsgemäße Solarkollektoren zusammengesetzt werden, komplett transportiert werden, so dass der Montageaufwand am Aufstellungsort gering ist.

Erfindugsgemäss ist vorgesehen, dass eine sich in Längsrichtung des Solarkollektors erstreckende Schmalseite zum Befestigen des Elementes an einem oder mehreren weiteren Segmenten ausgebildet ist. Auf diese Weise wird ermöglicht, dass erfindungsgemäße Segmente in vorteilhafter Weise miteinander verbindbar sind, um einen Solarkollektor zu bilden. Beispielsweise kann ein Solarkollektor aus zwei jeweils aus einem erfindungsgemäßen Segment bestehenden Panelen zusammengesetzt werden.

Erfindungsgemäss ist vorgesehen, dass an der Schmalseite eine oder mehrere Aussparungen zur Aufnahme zumindest eines Teils eines sich in Längsrichtung des Solarkollektors erstreckenden torsionssteifen Elementes angeordnet sind. Dabei sind vorzugsweise die Aussparungen in den Rippenelementen angeordnet. Auf diese Weise wird ermöglicht, dass die Segmente eine oder mehrere torsionssteife Elemente aufnehmen oder an diesen befestigt werden können, so dass mit Hilfe der erfindungsgemäßen Segmente und mindestens einem torsionssteifen Element ein Solarkollektor mit sehr hoher Torsionssteifigkeit gebildet werden kann.

Dabei kann bei dem erfindungsgemäßen Segment vorgesehen sein, dass in den Aussparungen ein torsionssteifer Profilträger als torsionssteifes Element aufgenommen ist und der torsionssteife Profilträger eine Verbindungsfläche zur Verbindung des Segmentes mit einem oder mehreren weiteren Segmenten bildet, wobei der torsionssteife Profilträger vorzugsweise als langgestrecktes Hohlprofil ausgebildet ist.

Mit anderen Worten: Das erfindungsgemäße Segment kann so ausgebildet sein, dass ein torsionssteifer Profilträger in dem Segment aufgenommen ist und eine Verbindungsfläche an der sich in Längsrichtung des Solarkollektors erstreckenden Schmalseite bildet, über die das Segment mit anderen Segmenten verbunden werden kann.

Das Vorsehen eines torsionssteifen Elementes in dem Segment oder in einem aus dem Segmenten gebildeten Solarkollektor ermöglicht die Bereitstellung eines Solarkollektors mit sehr hoher Torsionssteifigkeit, wobei gleichzeitig die selbsttragende Struktur durch das torsionssteife Element unterstützt wird. Darüber hinaus besteht die Möglichkeit, ein Traggestell des Solarkollektors an dem torsionssteifen Element zu befestigen, wodurch eine besonders stabile Halterung des aus den erfindungsgemäßen Segmenten gebildeten Solarkollektors ermöglicht werden kann. Das torsionssteife Element ermöglicht ferner eine Befestigung eines Drehantriebs an einem aus den erfindungsgemäßen Segmenten bestehenden Solarkollektors in vorteilhafter Weise, so dass eine für die Funktion des Solarkollektors vorteilhafte Drehung in das torsionssteife Element eingebracht werden kann, wobei durch das torsionssteife Element ermöglicht wird, dass ein aus den erfindungsgemäßen Segmenten bestehender Solarkollektor bei einer Drehung nur eine geringe Drehwinkelabweichung über die Länge besitzt.

Es kann vorgesehen sein, dass bei einem erfindungsgemäßen Segment die Plattenanordnung aus mehreren nebeneinander angeordneten Platten besteht. Ein derartiges erfindungsgemäßes Element hat sich als herstellungstechnisch besonders günstig erwiesen.

Bei einem Ausführungsbeispiel der Erfindung kann vorgesehen sein, dass das erfindungsgemäße Segment zwei sich quer zu der Längsrichtung des Solarkollektors erstreckende Stirnseiten aufweist, wobei mindestens eine der Stirnseiten eine Verbindungsfläche zum Verbinden eines Segmentes mit einem benachbarten Segment aufweist, wobei vorzugsweise die Verbindungsfläche durch eines der Rippenelemente gebildet ist.

Auf diese Weise wird ermöglicht, dass ein aus mehreren erfindungsgemäßen Segmenten zusammengesetzter Solarkollektor in vorteilhafter Weise gebildet werden kann. Auch ist es möglich, über die Verbindungsflächen eines Segmentes einen Solarkollektor mit einem weiteren aus den erfindungsgemäßen Segmenten bestehenden Solarkollektor zu verbinden.

In einem besonders bevorzugten Ausführungsbeispiel ist vorgesehen, dass die Plattenanordnung, die Rippenelemente, das mindestens eine Versteifungselement und/oder das torsionssteife Element aus Kunststoff, vorzugsweise zumindest teilweise aus Polypropylen, besonders bevorzugt aus einer Kunststoffstruktur mit in Polypropylen getränkten Fasern, besteht.

Bei einer derartigen Materialwahl ist es in vorteilhafter Weise möglich, ein möglichst leichtes Segment bereitzustellen, so dass ein Solarkollektor, der aus den erfindungsgemäßen Segmenten zusammengestellt ist, mit sehr leichtem Aufbau ermöglicht wird. Eine Kunststoffstruktur mit in Polypropylen getränkten Fasern, die beispielsweise Glasfasern sein können, ist besonders vorteilhaft, da eine derartige Kunststoffstruktur sehr robust ist.

Die Erfindung sieht in vorteilhafter Weise vor, dass die Plattenanordnung, die Rippenelemente, das mindestens eine Versteifungselement und/oder das torsionssteife Element aus einer Sandwichstruktur mit einer Kernstruktur und mindestens zwei die Kernstruktur von gegenüberliegenden Seiten bedeckenden Schichten bestehen. Eine derartige Struktur hat sich als besonders stabil erwiesen, so dass ein Segment und ein aus erfindungsgemäßen Segmenten bestehender Solarkollektor von hoher Festigkeit gebildet werden kann.

Dabei ist es von besonderem Vorteil, wenn die Kernstruktur eine Wabenstruktur besitzt, wobei vorzugsweise jede Wabe jeweils zu den bedeckenden Schichten hin geöffnet ist. Eine Wabenstruktur als Kernstruktur ermöglicht in besonders vorteilhafter Weise eine selbsttragende Struktur und eine hohe Torsionssteifigkeit eines erfindungsgemäßen Segmentes und eines aus den erfindungsgemäßen Segmenten bestehenden Solarkollektor.

Dabei besitzt das Segment durch die spezielle Wabenstruktur einen besonders leichten Aufbau.

Die Wabenstrukturen können eine mehreckigen oder einen runden Querschnitt besitzen.

In einem Ausführungsbeispiel der Erfindung ist vorgesehen, dass der Abstand zwischen den Rippenelementen an die Größen der Platten der Plattenanordnung angepasst ist, derart, dass unter jeder Platte mindestens ein Rippenelement angeordnet ist. Auf diese Weise wird ein besonders stabiler Aufbau des erfindungsgemäßen Segmentes erreicht, wobei gleichzeitig die Platten der Plattenanordnung in zuverlässiger Weise gestützt werden.

Die Platten der Plattenanordnung können eine Krümmung aufweisen, so dass in vorteilhafter Weise eine gekrümmte Oberfläche und somit eine Krümmung der Reflektionsschicht gebildet werden kann.

Die Erfindung sieht ferner einen Solarkollektor mit mehreren erfindungsgemäßen Segmenten vor. Ein derartiger Solarkollektor besitzt einen sehr leichten Aufbau, eine hohe Torsionssteifigkeit und eine selbsttragende Struktur.

Dabei kann vorgesehen sein, dass der Solarkollektor mindestens zwei erfindungsgemäße Segmente besitzt, die über die sich in Längsrichtung des Solarkollektors erstreckende Schmalseite miteinander verbunden sind. Auch kann vorgesehen sein, dass die mindestens zwei Segmente an den sich in Längsrichtung des Solarkollektors erstreckenden Schmalseiten über ein gemeinsames sich in Längsrichtung erstreckendes torsionssteifes Element, vorzugsweise ein langgestreckter Profilträger, verbunden sind.

Der Profilträger kann beispielsweise ein Hohlprofil besitzen. Durch das Vorsehen eines gemeinsamen, sich in Längsrichtung erstreckenden torsionssteifen Elementes können die mindestens zwei erfindungsgemäßen Segmente in vorteilhafter Weise zu einem erfindungsgemäßen Solarkollektor verbunden werden. Gleichzeitig ermöglicht das langgestreckte torsionssteife Element eine hohe Torsionssteifigkeit des Solarkollektors.

Durch das sich in Längsrichtung erstreckende torsionssteife Element kann beispielsweise eine Drehung in den Solarkollektor eingeleitet werden, wobei der Solarkollektor aufgrund des sich in Längsrichtung erstreckenden torsionssteifen Elementes über die Länge nur eine geringe Drehwinkelabweichung bei der Drehung aufweist.

In einem Ausführungsbeispiel der Erfindung ist vorgesehen, dass ein erfindungsgemäßer Solarkollektor aus zwei erfindungsgemäßen Segmenten besteht, die jeweils in den Aussparungen ein torsionssteifes Element aufweisen, das eine Verbindungsfläche zur Verbindung des Segmentes mit dem anderen Segment aufweist.

In einem anderen Ausführungsbeispiel der Erfindung kann vorgesehen sein, dass beim erfindungsgemäßen Solarkollektor mehrere Segmente, die über die sich quer zu der Längsrichtung des Solarkollektors erstreckenden Stirnseiten verbunden sind, ein gemeinsames torsionssteifes Element in den Aussparungen aufweisen, das eine Verbindungsfläche zur Verbindung der Segmente mit einem oder mehreren weiteren Segmenten aufweist, die ein zweites, eine Verbindungsfläche aufweisendes torsionssteifes Element besitzen.

Mit anderen Worten: Der erfindungsgemäße Solarkollektor besteht aus zwei Panelen, die jeweils ein eine Verbindungsfläche bildendes torsionssteifes Element aufweisen. Über die Verbindungsfläche der torsionssteifen Elemente werden die beiden Panele zu einem Solarkollektor zusammengesetzt. Dabei kann ein Panel aus einem oder einer Reihe von erfindungsgemäßen Segmenten, die über die Stirnseiten miteinander verbunden sind, bestehen.

Durch das Vorsehen von torsionssteifen Elementen mit Verbindungsflächen zur Verbindung der beiden Panele zum Bilden eines Solarkollektors wird nicht nur in vorteilhafter Weise ermöglicht, dass die Panele und somit die erfindungsgemäßen Segmente miteinander verbunden werden können, sondern es wird auch eine Struktur des Solarkollektors erreicht, die eine hohe Torsionssteifigkeit aufweist, was insbesondere bei der Drehung des Solarkollektors von Vorteil ist.

Im Folgenden wird die Erfindung unter Bezugnahme auf die nachfolgenden Figuren näher erläutert. Es zeigen:
- Fig. 1: eine schematische perspektivische Darstellung eines ersten Ausführungsbeispiels eines erfindungsgemäßen Solarkollektors,
- Fig. 2: eine schematische Seitenansicht des in Fig. 1 dargestellten erfindungsgemäßen Solarkollektors,
- Fig. 3: eine schematische perspektivische Darstellung eines zweiten Ausführungsbeispiels eines erfindungsgemäßen Solarkollektors,
- Fig. 4: eine schematische Seitenansicht des in Fig. 3 dargestellten erfindungsgemäßen Solarkollektors,
- Fig. 5: eine schematische Darstellung der für die Herstellung der erfindungsgemäßen Segmente und Solarkollektoren verwendeten Wabenstruktur und
- Fig. 6: eine schematische Darstellung der für die erfindungsgemäßen Segmente und Solarkollektoren verwendete Sandwichstruktur.

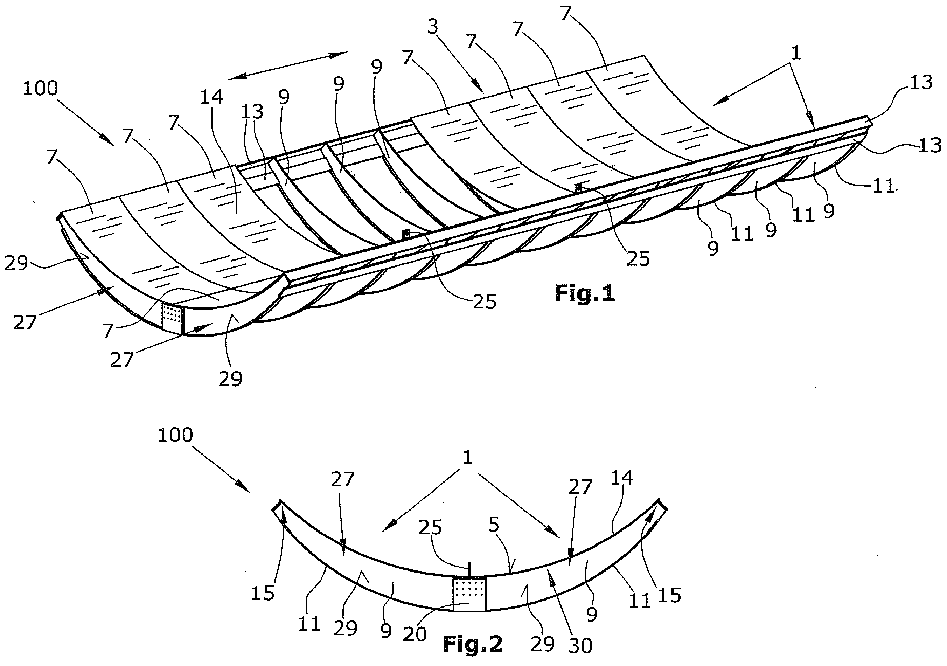

In Fig. 1 und 2 ist ein erstes Ausführungsbeispiel eines erfindungsgemäßen Solarkollektors 100 gezeigt.

Der erfindungsgemäße Solarkollektor 100 erstreckt sich in eine Längsrichtung (in Fig. 1 durch einen Pfeil gezeigt) und besteht aus zwei Panelen, die jeweils aus einem erfindungsgemäßen Segment 1 gebildet sind. Die Panele sind über sich in Längsrichtung des Solarkollektors erstreckende Schmalseiten der Segmente 1 miteinander verbunden. Die Schmalseite ist in dem in Fig. 1 und 2 dargestellten Ausführungsbeispiel jeweils die Seite des erfindungsgemäßen Segmentes 1, die dem jeweils anderen erfindungsgemäßen Segment 1 zugewandt ist.

Jedes erfindungsgemäße Segment 1 weist eine Plattenanordnung 3 auf, die eine flächige Oberseite 5 besitzt.

Auf der Oberseite 5 ist eine Reflektionsschicht 14 angeordnet, über die einstrahlendes Sonnenlicht mit Hilfe des Solarkollektors auf beispielsweise in den Fign. 1 und 2 nicht dargestellten rohrförmigen Absorber reflektiert werden kann. Die Platten 7 der Plattenanordnung 3 sind dafür gekrümmt ausgebildet, so dass die Reflektionsschicht 14 ebenfalls eine Krümmung aufweist.

Die erfindungsgemäßen Segmente 1 weisen auf der Unterseite der Plattenanordnung 3 mehrere Rippenelemente 9 auf, die sich quer zu der Längsrichtung des Solarkollektors 100 erstrecken. Die Rippenelemente 9 weisen dabei eine an die Krümmung der Platten 7 der Plattenanordnung 3 angepasste obere Kante 30 auf, wobei eine untere Kante 11 der Rippenelemente ebenfalls gekrümmt ausgeführt ist. Dadurch ist eine materialsparende Ausführung der Rippenelemente 9 möglich, die dennoch die verstärkende Wirkung besitzt.

Die erfindungsgemäßen Segmente 1 weisen ferner sich in Längsrichtung des Solarkollektors 100 erstreckende Versteifungselemente 13, die die Rippenelemente 9 miteinander verbinden, auf.

In dem in Fig. 1 dargestellten Ausführungsbeispiel sind die Versteifungselemente 13 als Strebenelemente ausgeführt. Dabei kann vorgesehen sein, dass eines der Versteifungselemente an Endkanten 15 der Rippenelemente 9 angeordnet ist, wie am besten aus Fig. 2 ersichtlich ist.

Das Vorsehen der Versteifungselemente 13 und der Rippenelemente 9 ermöglicht in vorteilhafter Weise eine selbsttragende Struktur des erfindungsgemäßen Segmentes 1 bzw. des erfindungsgemäßen Solarkollektors 100. Dabei hat sich herausgestellt, dass ein derartig hergestellter Solarkollektor 100 sehr stabil, insbesondere in Bezug auf von außen einwirkende Last, wie beispielsweise starke Winde, ist.

Der Abstand zwischen den Rippenelementen 9 ist dabei derart an die Plattenanordnung 3 angepasst, dass sich mindestens eine Rippe 9 jeweils unter einer Platte 7 der Plattenanordnung 3 befindet. Auf diese Weise ist ein Abstützen der Platten 7 in besonders vorteilhafter Weise möglich.

An der sich in Längsrichtung des Solarkollektors erstreckenden Schmalseite der erfindungsgemäßen Segmente 1 weisen die Rippenelemente 9 Aussparungen auf, die in Fig. 1 und Fig. 2 nicht dargestellt sind. Die Aussparungen sind dabei an ein sich in Längsrichtung des Solarkollektors 100 erstreckendes torsionssteifes Element 20 angepasst und nehmen das torsionssteife Element 20 auf. Auf diese Weise werden die beiden jeweils aus einem erfindungsgemäßen Segment 1 gebildeten Panele des erfindungsgemäßen Solarkollektors 100 auf einfache Art und Weise verbunden, indem die Segmente 1 jeweils an dem torsionssteifen Element 20 befestigt werden. Das torsionssteife Element 20 kann beispielsweise ein torsionssteifer Profilträger sein.

Die erfindungsgemäße Struktur der Segmente 1 und des Solarkollektors 100 ermöglicht in vorteilhafter Weise eines selbsttragende Struktur, einen leichten Aufbau sowie eine hohe Torsionssteifigkeit des erfindungsgemäßen Solarkollektors. Dabei kann über das torsionssteife Element 20 in vorteilhafter Weise eine Drehbewegung in den Solarkollektor 100 eingeleitet werden, indem der Solarkollektor 100 über das torsionssteife Element 20 an einem Traggestell mit Drehantrieb befestigt wird.

An diesem Traggestell können auch die rohrförmigen Absorber, die in Fig. 1 und Fig. 2 nicht dargestellt sind, befestigt werden, wobei an dem erfindungsgemäßen Solarkollektor 100 Flansche 25 zur Halterung der rohrförmigen Absorber vorgesehen sein können.

Die erfindungsgemäßen Segmente 1 weisen jeweils zwei sich quer zu der Längsrichtung des Solarkollektors erstreckende Stirnseiten 27 auf, die eine erste Verbindungsfläche 29 zum Verbinden eines erfindungsgemäßen Segmentes mit weiteren erfindungsgemäßen Segmenten bilden können. Dabei kann die Verbindungsfläche 29 beispielsweise durch eines der Rippenelemente 9 gebildet sein.

Mit Hilfe der Verbindungsflächen 29 können somit die Solarkollektoren aus einer Vielzahl von erfindungsgemäßen Segmenten 1 gebildet werden, indem die erfindungsgemäßen Segmente 1 über die Verbindungsflächen 29 miteinander verbunden werden. Dies kann beispielsweise über eine Klebeverbindung verwirklicht sein. Auch besteht die Möglichkeit, zwei oder mehrere erfindungsgemäße Solarkollektoren 100 über die Verbindungsflächen 29 der erfindungsgemäßen Segmente 1 miteinander zu verbinden.

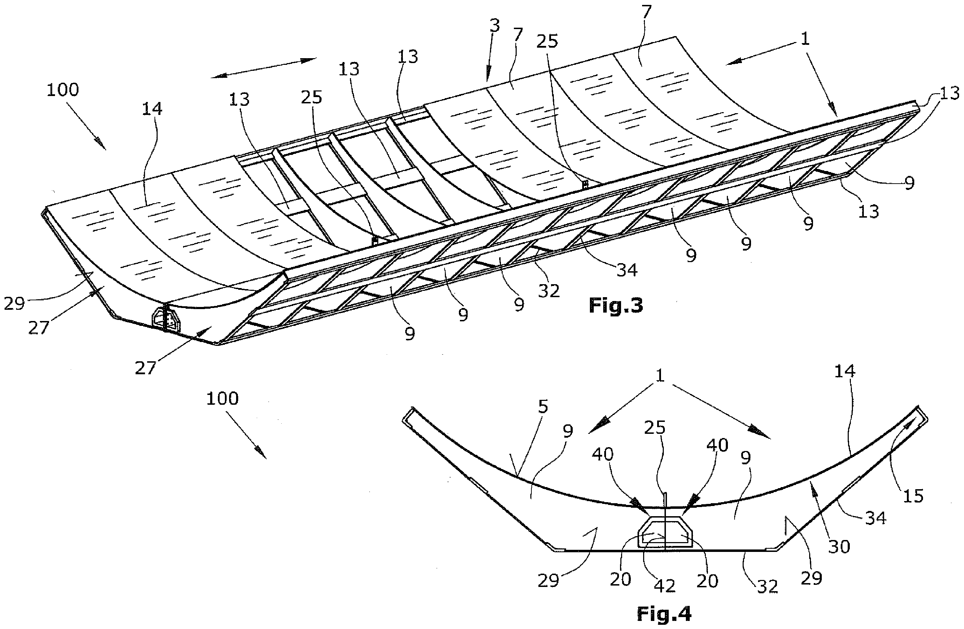

In den Fign. 3 und 4 ist ein zweites Ausführungsbeispiel eines erfindungsgemäßen Solarkollektors 100 dargestellt.

Der Solarkollektor 100 besteht aus zwei erfindungsgemäßen Segmenten 1, die jeweils eine Plattenanordnung 3 mit einer flächigen Oberseite 5 besitzen. Auf der Oberseite 5 ist eine Reflektionsschicht 14 aufgebracht, die einfallendes Licht auf (in den Fign. 3 und 4 nicht dargestellte) rohrförmige Absorber reflektieren kann. Die Plattenanordnung 3 besteht aus mehreren nebeneinander angeordneten Platten 7, die gekrümmt ausgebildet sind.

An der Unterseite der Plattenanordnung 3 sind mehrere Rippenelemente 9 angeordnet, die sich quer zu der Längsrichtung des Solarkollektors 100 erstrecken. Die Längsrichtung ist in Fig. 3 durch einen Pfeil gezeigt. Die Rippenelemente 9 weisen eine obere Kante 30 auf, die an die Krümmung der Platten 7 der Plattenanordnung 3 angepasst ist. Der oberen Kante gegenüberliegend weist jedes Rippenelement 9 eine erste Unterkante 32 und eine in einem stumpfen Winkel zu der ersten Unterkante 32 angeordnete zweite Unterkante 34 auf. In der in Fig. 3 dargestellten Grundstellung des erfindungsgemäßen Segmentes 1 bzw. des erfindungsgemäßen Solarkollektors 100 verläuft die erste Unterkante 32 horizontal. Da die erste Unterkante 32 bzw. die zweite Unterkante 34 gerade verlaufen, lassen sich die erfindungsgemäßen Segmente 1 oder aus den erfindungsgemäßen Segmenten 1 bestehende erfindungsgemäße Solarkollektoren 100 in vorteilhafter Weise ablegen, lagern oder transportieren, indem diese Segmente 1 bzw. die Solarkollektoren 100 auf den ersten Unterkanten 32 oder den zweiten Unterkanten 34 abgelegt werden.

Die erfindungsgemäßen Segmente 1 weisen ferner Versteifungselemente 13 auf, die sich in Längsrichtung der Solarkollektoren 100 erstrecken und die Rippenelemente 9 miteinander verbinden. In dem in Fig. 3 dargestellten Ausführungsbeispiel sind die erfindungsgemäßen Versteifungselemente 13 als Strebenelemente ausgeführt.

Dabei können einige der Versteifungselemente 13 ein Winkelprofil besitzen, so dass sie sich über die Endkante 15 des Rippenelementes 9 zu der zweiten Unterkante 34 erstrecken und die zwischen der Endkante 15 und der zweiten Unterkante 34 gebildete Kante umgreifen können. Auch ist es möglich, dass eines der Versteifungselemente 13 die zwischen der ersten Unterkante 32 und der zweiten Unterkante 34 gebildeten Kante der Rippenelemente 9 umgreifen. Durch das Vorsehen der Rippenelemente 9 und der Versteifungselemente 13 wird eine besonders hohe Stabilität der erfindungsgemäßen Segmente 1 bzw. eines aus den erfindungsgemäßen Segmenten 1 bestehenden erfindungsgemäßen Solarkollektors 100 ermöglicht. Ein derartiger Solarkollektor 100 besitzt einen leichten Aufbau, eine selbsttragende Struktur sowie eine hohe Torsionssteifigkeit. Diese wird unter anderem durch die Versteifungselemente 13 erreicht. Durch das Vorsehen von Versteifungselementen 13, die ein Winkelprofil aufweisen, wird eine besonders hohe Torsionssteifigkeit ermöglicht.

Um die Torsionssteifigkeit eines erfindungsgemäßen Solarkollektors 100 noch weiter zu erhöhen, sind in dem in den Fign. 3 und 4 dargestellten Ausführungsbeispiel eines erfindungsgemäßen Solarkollektors 100 zwei sich in Längsrichtung des Solarkollektors 100 erstreckende torsionssteife Elemente 20 vorgesehen. Jeweils ein torsionssteifes Element 20 ist dabei in Aussparungen 40 eines erfindungsgemäßen Segmentes 1 aufgenommen und bildet an der sich in Längsrichtung erstreckenden Schmalseite des erfindungsgemäßen Segmentes 1 eine Verbindungsfläche 42, über die ein erfindungsgemäßes Segment 1 mit der Verbindungsfläche 42 eines zweiten erfindungsgemäßen Segmentes 1 verbunden werden kann. Die torsionssteifen Elemente 20 können beispielsweise als Hohlprofilträger ausgebildet sein.

Durch die torsionssteifen Elemente 20 wird ein erfindungsgemäßer Solarkollektor von besonders hoher Torsionssteifigkeit geschaffen. Ferner ermöglichen die torsionssteifen Elemente 20 in besonders vorteilhafter Weise die Einleitung einer Drehung in dem erfindungsgemäßen Solarkollektor 100, indem der Solarkollektor 100 über die torsionssteifen Elemente 20 an einem Traggestell mit Drehvorrichtung befestigt wird.

Durch die hohe Torsionssteifigkeit des erfindungsgemäßen Solarkollektors 100 wird ermöglicht, dass bei einer Drehung des Solarkollektors nur eine geringe Drehwinkelabweichung entsteht. Die Torsionssteifigkeit eines erfindungsgemäßen Solarkollektors ist dabei derartig hoch, dass selbst wenn mehrere erfindungsgemäße Solarkollektoren miteinander verbunden und durch eine gemeinsame Drehvorrichtung angetrieben werden, nur eine geringe Drehwinkelabweichung zwischen den verschiedenen Solarkollektoren entsteht.

Die Plattenanordnung 3, die Rippenelemente 9, die Versteifungselemente 13 und das torsionssteife Element können aus Kunststoff gefertigt sein. Dabei hat sich herausgestellt, dass Polypropylen sich besonders gut für die Fertigung der erfindungsgemäßen Segmente 1 und des erfindungsgemäßen Solarkollektors 100 eignet. Dabei kann insbesondere vorgesehen sein, dass das Polypropylen in einer Kunststoffstruktur verwendet wird, in der Fasern, insbesondere Glasfasern, in Polypropylen getränkt sind.

Eine derartige Kunststoffstruktur hat sich als besonders stabil bei der Verwendung in erfindungsgemäßen Segmenten 1 herausgestellt.

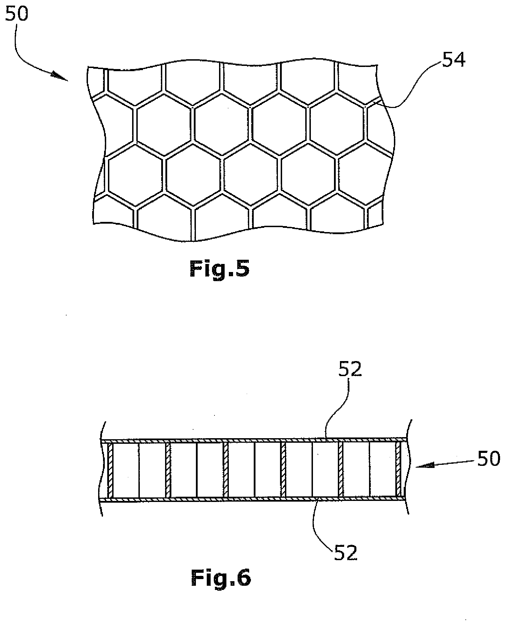

Um die Stabilität der einzelnen Elemente des erfindungsgemäßen Segmentes noch weiter zu erhöhen, sieht die Erfindung insbesondere vor, dass für die Plattenanordnung 3, die Rippenelemente 9, die Versteifungselemente 13 und das torsionssteife Element 20 eine Sandwichstruktur verwendet wird, wie sie in Fig. 6 dargestellt ist. Die Sandwichstruktur besteht aus einer Kernstruktur 50 sowie zwei Deckschichten 52, die die Kernstruktur von gegenüberliegenden Seiten bedeckt. Dabei kann die Kernstruktur 50 aus einer Wabenstruktur, wie sie beispielsweise in Fig. 5 dargestellt ist, bestehen.

Dabei können Seitenwände 54 der Waben ebenfalls aus einer Kunststoffstruktur aus in Polypropylen getränkten Fasern bestehen. Die Waben besitzen einen sechseckigen Querschnitt, wobei es selbstverständlich möglich ist, dass die Waben auch einen anderen Querschnitt, beispielsweise einen anderen mehreckigen oder runden Querschnitt, besitzen. Die Sandwichstruktur mit der aus einer Wabenstruktur bestehenden Kernstruktur ist derart ausgebildet, dass die Waben zu den die Kernstruktur bedeckenden Schichten 52 hin geöffnet sind.

Eine derartige Struktur hat sich als besonders stabil für die Herstellung der erfindungsgemäßen Segmente 1 herausgestellt, wobei gleichzeitig ein besonders leichter Aufbau möglich ist.

Neben den dargestellten Ausführungsbeispielen der erfindungsgemäßen Segmente und der erfindungsgemäßen Solarkollektoren sind selbstverständlich noch andere Ausführungsbeispiele der Erfindung möglich. Beispielsweise müssen die Versteifungselemente nicht zwangsläufig als Strebenelemente ausgebildet sein. Ein Versteifungselement kann beispielsweise auch aus einer langgestreckten Platte bestehen, das einen Teil oder die gesamte Unterseite des Segmentes bedeckt.

Die erfindungsgemäßen Solarkollektoren können beispielsweise eine Länge von 12 m besitzen. Die gekrümmte Oberfläche, auf der eine Reflektionsschicht aufgebracht ist, kann einen Radius zwischen 2,50 m und 3,50 m besitzen, vorzugsweise zwischen 3,20 m und 3,30 m.

Die erfindungsgemäßen Solarkollektoren können aus zwei Panelen bestehen, die jeweils entweder aus einem erfindungsgemäßen Segment oder mehreren aneinander gereihten erfindungsgemäßen Segmenten bestehen. Bei dem Ausführungsbeispiel, bei dem mehrere aneinander gereihte erfindungsgemäße Segmente ein Panel bilden, können die Segmente über eine Klebeverbindung miteinander verbunden sein.

Bei den erfindungsgemäßen Solarkollektoren wird es ermöglicht, dass mehrere Solarkollektoren in Längsrichtung hintereinander angeordnet werden, so dass diese gemeinsam über einen Drehantrieb in eine Drehbewegung versetzt werden können.

Dabei ermöglicht die hohe Torsionssteifigkeit der erfindungsgemäßen Solarkollektoren, dass nur eine geringe Drehwinkelabweichung zwischen den aneinander gereihten Solarkollektoren bei der Drehung entsteht, wodurch ermöglicht wird, dass die erfindungsgemäßen Solarkollektoren in Gebrauch optimal zu dem einfallenden Sonnenlicht ausgerichtet werden können.

## Patentansprüche

1. Segment (1) eines sich in eine Längsrichtung erstreckenden Solarkollektors (100)
- mit einer Plattenanordnung (3) mit einer flächigen Oberseite (5), wobei eine Reflektionsschicht (14) auf der Oberseite (5) angeordnet ist,
- wobei an einer Unterseite der Plattenanordnung (3) mehrere Rippenelemente (9) angeordnet sind, wobei jedes Rippenelement (9) sich quer zu der Längsrichtung des Solarkollektors (100) erstreckt,
- wobei mindestens ein Versteifungselement (13), vorzugsweise mindestens ein Strebenelement, sich in Längsrichtung des Solarkollektors (100) erstreckt, das die Rippenelemente (9) verbindet und
- wobei eine sich in Längsrichtung des Solarkollektors (100) erstreckende Schmalseite zum Befestigen des Segmentes (1) an einem oder mehreren weiteren Segmenten (1) ausgebildet ist,
**dadurch gekennzeichnet,**
- **dass** in der Schmalseite eine oder mehrere Aussparungen (40) zur Aufnahme zumindest eines Teils eines sich in Längsrichtung des Solarkollektors (100) erstreckenden torsionssteifen Elementes (20) angeordnet sind.

2. Segment nach Anspruch 1, **dadurch gekennzeichnet, dass** die Aussparungen (40) in den Rippenelementen (9) angeordnet sind.

3. Segment nach Anspruch 1 oder 2, **dadurch gekennzeichnet, dass** in den Aussparungen ein torsionssteifer Profilträger als torsionssteifes Element (20) aufgenommen ist und eine Verbindungsfläche (42) zur Verbindung des Segmentes (1) mit einem oder mehreren weiteren Segmenten (1) bildet, wobei der torsionssteife Profilträger vorzugsweise als langgestrecktes Hohlprofil ausgebildet ist.

4. Segment nach einem der Ansprüche 1 bis 3, **dadurch gekennzeichnet, dass** die Plattenanordnung (3) aus mehreren Platten (7) besteht.

5. Segment nach einem der Ansprüche 1 bis 4, **gekennzeichnet durch** zwei sich quer zu der Längsrichtung des Solarkollektors (100) erstreckende Stirnseiten (27), wobei mindestens eine der Stirnseiten (27) eine Verbindungsfläche (29) zum Verbinden eines Segmentes (1) mit einem benachbarten Segment (1) aufweist, wobei vorzugsweise die Verbindungsfläche (29) durch eines der Rippenelemente (9) gebildet ist.

6. Segment nach einem der Ansprüche 1 bis 5, **dadurch gekennzeichnet, dass** die Plattenanordnung (3), die Rippenelemente (9), das mindestens eine Versteifungselement (13) und/oder das torsionssteife Element (20) aus Kunststoff, vorzugsweise zumindest teilweise aus Polypropylen, besonders bevorzugt aus einer Kunststoffstruktur mit in Polypropylen getränkten Fasern, besteht.

7. Segment nach einem der Ansprüche 1 bis 6, **dadurch gekennzeichnet, dass** die Plattenanordnung (3), die Rippenelemente (9), das mindestens eine Versteifungselement (13) und/oder das torsionssteife Element (20) aus einer Sandwichstruktur mit einer Kernstruktur (50) und aus mindestens zwei die Kernstruktur (50) von gegenüberliegenden Seiten bedeckenden Schichten (52) bestehen.

8. Segment nach Anspruch 7, **dadurch gekennzeichnet, dass** die Kernstruktur eine Wabenstruktur besitzt, wobei vorzugsweise jede Wabe jeweils zu den bedeckenden Schichten (52) hin geöffnet ist und/oder wobei vorzugsweise die Waben einen mehreckigen und/oder runden Querschnitt besitzen.

9. Segment nach einem der Ansprüche 4 bis 8, **dadurch gekennzeichnet, dass** der Abstand zwischen dem Rippenelement (9) an die Größe der Platten (7) angepasst ist, derart, dass unter jeder Platte (7) mindestens ein Rippenelement (9) angeordnet ist und/oder dass die Platten (7) eine Krümmung aufweisen.

10. Solarkollektor (100) mit mehreren Segmenten (1) nach einem der Ansprüche 1 bis 9.

11. Solarkollektor nach Anspruch 10, **dadurch gekennzeichnet, dass** mindestens zwei Segmente (1) über die sich in Längsrichtung des Solarkollektors (100) erstreckenden Schmalseiten miteinander verbunden sind.

12. Solarkollektor nach Anspruch 11, **dadurch gekennzeichnet, dass** die mindestens zwei Segmente (1) an den sich in Längsrichtung des Solarkollektors erstreckenden Schmalseiten über ein gemeinsames, sich in Längsrichtung erstreckendes torsionssteifes Element (20), vorzugsweise einen langgestreckten Profilträger, verbunden sind.

13. Solarkollektor nach Anspruch 11, **dadurch gekennzeichnet, dass** zwei Segmente (1) vorgesehen sind, wobei jedes Segment (1) ein torsionssteifes Element (20) in den Aussparungen (40) aufweist, das eine Verbindungsfläche (42) zur Verbindung des Segmentes (1) mit dem anderen Segment (1) aufweist.

14. Solarkollektor nach Anspruch 11, **dadurch gekennzeichnet, dass** mehrere Segmente (1), die über die quer zu der Längsrichtung des Solarkollektors erstreckenden Stirnseiten (27) verbunden sind, ein gemeinsames torsionssteifes Element (20) in den Aussparungen (40) aufweisen, das eine Verbindungsfläche (47) zur Verbindung der Segmente (1) mit einem oder mehreren weiteren Segmenten (1) aufweist, die ein zweites eine Verbindungsfläche (42) aufweisendes torsionssteifes Element (20) aufweisen.

## Claims

1. Segment (1) of a solar collector (100) extending in a longitudinal direction
- with a plate arrangement (3) with a flat upper side (5), wherein a reflective layer (14) is arranged on the upper side (5),
- wherein on a lower side of the plate arrangement (3) a plurality of rib elements (9) is arranged, wherein each rib element (9) extends transversally to the longitudinal direction of the solar collector (100),
- wherein at least one rigidifying element (13), preferably at least one brace element, extends in the longitudinal direction of the solar collector (100), connecting the rib elements (9) and
- wherein a narrow side extending in the longitudinal direction of the solar collector (100) is configured to secure the segment (1) to one or more further segments (1),
**characterised in that**
- in the narrow side one or more recesses (40) is or are arranged for accommodating at least a part of a torsion-resistant element (20) extending in the longitudinal direction of the solar collector (100).

2. Segment according to Claim 1, **characterised in that** the recesses (40) are arranged in the rib elements (9).

3. Segment according to either Claim 1 or 2, **characterised in that** a torsion-resistant beam is accommodated in the recesses as a torsion-resistant element (20) forming a connecting surface (42) for connecting the segment (1) with one or more further segments (1), wherein the torsion-resistant beam is preferably configured as a longitudinally-extending hollow profile.

4. Segment according to any one of Claims 1 to 3, **characterised in that** the plate arrangement (3) comprises a plurality of plates (7).

5. Segment according to any one of Claims 1 to 4, **characterised by** two front sides (27) extending transversally to the longitudinal direction of the solar collector (100), wherein at least one of the front sides (27) has a connecting surface (29) for connecting a segment (1) with an adjacent segment (1), wherein the connecting surface (29) is preferably formed by one of the rib elements (9).

6. Segment according to any one of Claims 1 to 5, **characterised in that** the plate arrangement (3), the rib elements (9), the at least one rigidifying element (13) and/or the torsion-resistant element (20) comprise plastic, preferably at least in part polypropylene, particularly preferably a plastic structure with polypropylene-impregnated fibres.

7. Segment according to any one of Claims 1 to 6, **characterised in that** the plate arrangement (3), the rib elements (9), the at least one rigidifying element (13) and/or the torsion-resistant element (20) comprise a sandwich structure with a core structure (50) and at least two layers (52) covering opposing sides of the core structure (50).

8. Segment according to Claim 7, **characterised in that** the core structure has a honeycomb structure, wherein preferably each honeycomb is open to the covering layer (52) and/or wherein the honeycombs preferably have a polygonal or round cross-section.

9. Segment according to any one of Claims 4 to 8, **characterised in that** the distance between the rib element (9) is matched to the size of the plates (7), such that below each plate (7) at least one rib element is arranged and/or **in that** the plates (7) have a curvature.

10. Solar collector (100) with a plurality of segments (1) according to any one of Claims 1 to 9.

11. Solar collector according to Claim 10, **characterised in that** at least two segments (1) are connected together via the narrow side extending in the longitudinal direction of the solar collector (100).

12. Solar collector according to Claim 11, **characterised in that** the at least two segments (1) are connected to the narrow side extending in the longitudinal direction of the solar collector via a common torsion-resistant element (20), preferably an elongated beam, extending in the longitudinal direction.

13. Solar collector according to Claim 11, **characterised in that** two segments (1) are provided, wherein each segment (1) has a torsion-resistant element (20) in the recesses (40), having a connecting surface (42) for connecting the segment (1) with the other segment (1).

14. Solar collector according to Claim 11, **characterised in that** a plurality of segments (1), connected via the front sides (27) extending transversally to the longitudinal direction of the solar collector, have a common torsion-resistant element (20) in the recesses (40), having a connecting surface (47) for connecting the segments (1) with one or more further segments (1) having a second torsion-resistant element (20) having a connecting surface (42).

## Revendications

1. Segment (1) d'un collecteur solaire (100) qui s'étend dans une direction longitudinale,
- comprenant un arrangement de plaques (3) doté d'un côté supérieur plat (5), une couche réfléchissante (14) étant disposée sur le côté supérieur (5),
- plusieurs éléments en nervure (9) étant disposés sur un côté inférieur de l'arrangement de plaques (3), chaque élément en nervure (9) s'étendant transversalement par rapport à la direction longitudinale du collecteur solaire (100),
- au moins un élément raidisseur (13), de préférence au moins un élément jointif, s'étendant dans la direction longitudinale du collecteur solaire (100), lequel relie les éléments en nervure (9),
- un côté étroit qui s'étend dans la direction longitudinale du collecteur solaire (100) étant configuré pour fixer le segment (1) à un ou plusieurs segments (1) supplémentaires,
**caractérisé en ce**
- **qu'**une ou plusieurs cavités (40) destinées à accueillir au moins une partie d'un élément rigide en torsion (20) qui s'étend dans la direction longitudinale du collecteur solaire (100) sont disposées dans le côté étroit.

2. Segment selon la revendication 1, **caractérisé en ce que** les cavités (40) sont disposées dans les éléments en nervure (9).

3. Segment selon la revendication 1 ou 2, **caractérisé en ce qu'**un élément porteur profilé rigide en torsion faisant office d'élément rigide en torsion (20) est accueilli dans les cavités et forme une surface de liaison (42) servant à relier le segment (1) avec un ou plusieurs autres segments (1), l'élément porteur profilé rigide en torsion étant de préférence réalisé sous la forme d'un profilé creux allongé.

4. Segment selon l'une des revendications 1 à 3, **caractérisé en ce que** l'arrangement de plaques (3) se compose de plusieurs plaques (7).

5. Segment selon l'une des revendications 1 à 4, **caractérisé par** deux côtés frontaux (27) qui s'étendent transversalement par rapport à la direction longitudinale du collecteur solaire (100), au moins l'un des côtés frontaux (27) possédant une surface de liaison (29) servant à relier un segment (1) avec un segment (1) voisin, la surface de liaison (29) étant de préférence formée par un élément en nervure (9).

6. Segment selon l'une des revendications 1 à 5, **caractérisé en ce que** l'arrangement de plaques (3), les éléments en nervure (9), l'au moins un élément raidisseur (13) et/ou l'élément rigide en torsion (20) sont constitués de matière plastique, de préférence au moins partiellement de polypropylène, notamment de préférence d'une structure en matière plastique avec des fibres imprégnées de polypropylène.

7. Segment selon l'une des revendications 1 à 6, **caractérisé en ce que** l'arrangement de plaques (3), les éléments en nervure (9), l'au moins un élément raidisseur (13) et/ou l'élément rigide en torsion (20) sont constitués d'une structure en sandwich ayant une structure d'âme (50) et au moins deux couches (52) qui recouvrent la structure d'âme (50) depuis deux côtés opposés.

8. Segment selon la revendication 7, **caractérisé en ce que** la structure d'âme possède une structure alvéolaire, chaque alvéole étant de préférence ouverte vers les couches (52) couvrantes et/ou les alvéoles possédant de préférence une section transversale polygonale et/ou ronde.

9. Segment selon l'une des revendications 4 à 8, **caractérisé en ce que** l'écart entre les éléments en nervure (9) est adapté à la grandeur des plaques (7) de telle sorte qu'au moins un élément en nervure (9) est disposé sous chaque plaque (7) et/ou **en ce que** les plaques (7) présentent une courbure.

10. Collecteur solaire (100) comprenant plusieurs segments (1) selon l'une des revendications 1 à 9.

11. Collecteur solaire (100) selon la revendication 10, **caractérisé en ce qu'**au moins deux segments (1) sont reliés l'un à l'autre par le biais des côtés étroits qui s'étendent dans la direction longitudinale du collecteur solaire (100).

12. Collecteur solaire selon la revendication 11, **caractérisé en ce que** les au moins deux segments (1) au niveau des côtés étroits qui s'étendent dans la direction longitudinale du collecteur solaire sont reliés par le biais d'un élément rigide en torsion (20) qui s'étend dans la direction longitudinale, de préférence ou élément porteur profilé allongé.

13. Collecteur solaire selon la revendication 11, **caractérisé en ce que** deux segments (1) sont présents, chaque segment (1) possédant un élément rigide en torsion (20) dans les cavités (40), lequel possède une surface de liaison (42) servant à relier le segment (1) avec l'autre segment (1).

14. Collecteur solaire selon la revendication 11, **caractérisé en ce que** plusieurs segments (1), lesquels sont reliés par le biais des côtés frontaux (27) qui s'étendent transversalement à la direction longitudinale du collecteur solaire, possèdent un élément rigide en torsion (20) commun dans les cavités (40), lequel possède une surface de liaison (42) servant à relier le segment (1) avec un ou plusieurs segments (1) supplémentaires, lesquelles possèdent un deuxième élément rigide en torsion (20) possédant une surface de liaison (42).
